(19) Europäisches Patentamt

European Patent Office

Office européen des brevets

(11) Veröffentlichungsnummer: **0 276 407 B1**

(12) **EUROPÄISCHE PATENTSCHRIFT**

(45) Veröffentlichungstag der Patentschrift: **08.07.92**

(51) Int. Cl.⁵: **G10K 3/00**, G01H 1/00

(21) Anmeldenummer: **87117710.1**

(22) Anmeldetag: **30.11.87**

(54) **Einrichtung zum Kalibrieren eines Körperschallüberwachungssystems.**

(30) Priorität: **11.12.86 DE 3642388**

(43) Veröffentlichungstag der Anmeldung:
**03.08.88 Patentblatt 88/31**

(45) Bekanntmachung des Hinweises auf die
Patenterteilung:
**08.07.92 Patentblatt 92/28**

(84) Benannte Vertragsstaaten:
**BE CH DE ES FR GB IT LI NL SE**

(56) Entgegenhaltungen:
**DE-A- 2 946 264**
**FR-A- 2 350 890**
**FR-A- 2 352 595**
**US-A- 3 302 744**

(73) Patentinhaber: **SIEMENS AKTIENGESELL-
SCHAFT
Wittelsbacherplatz 2
W-8000 München 2(DE)**

(72) Erfinder: **Stipsits, Günter
Poxdorfer Strasse 10
W-8524 Neunkirchen am Brand(DE)**
Erfinder: **Schulze, Günther, Dr.
Geissäckerstrasse 15
W-8510 Fürth(DE)**
Erfinder: **Badelt, Max
Siemensstrasse 40
W-8501 Schwanstetten(DE)**
Erfinder: **Groder, Ernst
Rathsberger Strasse 28
W-8520 Erlangen(DE)**

# Beschreibung

Die Erfindung betrifft eine Einrichtung zum Kalibrieren eines Körperschallüberwachungssystems, bestehend aus einem Stößel, der durch Elektromagnete gegen einen Körper, welcher Sensoren eines Körperschallüberwachungssystems zur Überwachung des Körpers trägt, zu bewegen ist, wobei in einem Gehäuse den Stößel umfassend eine Beschleunigungsspule zur Beschleunigung des Stößels auf den Körper zu angeordnet und mit einer Steuereinheit zur Steuerung der Bewegung des Stößels verbunden ist.

An metallischen Behältern und Rohrleitungen, insbesondere in Kernkraftwerken, sind zur Feststellung und Ortung von losen und lockeren Teilen Körperschallüberwachungssysteme, KÜS genannt, eingesetzt. Ein KÜS besteht aus Sensoren, die mit einer Auswerteeinheit verbunden sind. Zur Kalibrierung des Systems ist bisher bekannt, ein definiertes Kalibriersignal der Auswerteeinheit vor ihrem Vorverstärker zuzuführen.

Bisher ist daher nur eine Kalibrierung der elektronischen Auswerteeinheit möglich. Das gesamte KÜS ist beim Bekannten nur auf Funktion zu überprüfen, und zwar nur wenn die gesamte überwachte Anlage stillgesetzt ist. Das ist besonders bei kerntechnischen Anlagen unwirtschaftlich.

Aus der DE-A-29 46 264 ist ein elektrodynamisches Impulsanregegerät bekannt. Dabei wird ein Schlagkörper durch eine Spule beschleunigt gegen ein Metallteil bewegt, um dort Schwingungen zu erzeugen. Das Schwingungsverhalten des Metallteiles, beispielsweise einer Kraftfahrzeugkarosserie, wird dann untersucht. Ein derartiges Impulsanregegerät ist zum Kalibrieren eines KÜS ungeeignet, da die Schlagstärke nicht exakt reproduzierbar ist. Darüber hinaus ist es für den Einsatz in einer kerntechnischen Anlage nicht ausgelegt.

Der Erfindung liegt die Aufgabe zugrunde, eine Einrichtung zum Kalibrieren eines KÜS zu entwickeln, die das gesamte KÜS, einschließlich der Sensoren an den zu überwachenden Anlagenteilen kalibrieren kann. Außerdem soll ein KÜS in einer Anlage, die ein Kernkraftwerk sein kann, auch während der Betriebszeit zu kalibrieren bzw. auf Funktion zu überprüfen sein. Dazu ist das bekannte Impulsanregegerät so weiter zu entwickeln, daß es zum Kalibrieren eines KÜS geeignet und in einer kerntechnischen Anlage einsetzbar ist.

Die Aufgabe wird gemäß der Erfindung dadurch gelöst, daß in dem Gehäuse den Stößel umfassend eine Hubspule, durch die der Stößel gegen einen Anschlag am Gehäuse vom Körper weg zu bewegen ist, angeordnet und mit der Steuereinheit verbunden ist, die dazu mit am Anschlag und am Aufschlagpunkt des Stößels angeordneten Kontakten in Verbindung steht.

Durch die Steuereinheit wird der Strom durch die Beschleunigungsspule geregelt. Dadurch ist die Beschleunigung des Stößels mit großer Genauigkeit festzulegen. Die Kombination von Anschlag und Hubspule gewährleistet eine gleichbleibend konstante Ausgangsposition des Stößels.

Mit der erfindungsgemäßen Kombination von Hubspule, Anschlag und steuerbarer Beschleunigungsspule wird der Vorteil erzielt, daß die Schlagstärke des Stößels genau einstellbar ist. Erst hierdurch ist die erfindungsgemäße Einrichtung zum Kalibrieren eines KÜS einsetzbar. Ein Schlag der erfindungsgemäßen Kalibriereinrichtung mit genau bekannter Stärke verursacht eine genau bekannte Schallquelle am Körper einer zu überwachenden Anlage. Die Meßwerte des KÜS sind mit dieser bekannten Schallquelle kalibrierbar. Außerdem ist wegen der einstellbaren Schlagstärke das gesamte KÜS einschließlich der Körperschallsensoren selbst während des Betriebes einer kerntechnischen Anlage, die das KÜS trägt, überprüfbar. Das ist bei kerntechnischen Anlagen besonders vorteilhaft.

Mit der Erfindung wird der Vorteil erzielt, daß auch die Körperschallaufnehmer des KÜS erstmals automatisiert kalibrierbar sind. Darüber hinaus ist die erfindungsgemäße Einrichtung an Anlagen, wie beispielsweise an Rohrleitungen eines Kernkraftwerkes, auch während der Betriebszeit einsetzbar.

Die Einrichtung zum Kalibrieren eines KÜS ist beispielsweise mit einer Bodenplatte als integrierte Aufschlagplatte ausgestattet, die am zu überwachenden Anlagenteil anliegt. Der Stößel trifft statt auf das Anlagenteil diesen Boden. Von dort werden die Schallimpulse auf das Anlagenteil übertragen. Hiermit erzielt man den Vorteil, daß der Impuls des Stößels auf den Anlagenteil übertragen wird, ohne eine Beschädigung des Anlagenteiles hervorzurufen.

Die Beschleungiungsspule ist beispielsweise mit Speicherkondensatoren verbunden. Dadurch wird die zur Beschleunigung des Stößels notwendige hohe Stromstärke in der Spule schnell bereitgestellt.

Getrennte Kondensatoren sind mit der Beschleunigungsspule derart verbunden, daß bei ihrer Entladung der Stößel beschleunigt als auch gebremst werden kann. Über die Steuereinheit sind diese Kondensatoren mit einem Aufprallkontakt an der Bodenplatte verbunden. Sowie der Stößel die Bodenplatte berührt, wird dort eine leitende Verbindung hergestellt, worauf die Steuereinheit den Bremsvorgang einleitet. Damit wird der Vorteil erzielt, daß ein Einzelschlag erzeugt und mehrfache Schläge infolge Rückprallen vermieden werden.

Die Schlagstärke ist über die Steuereinheit einstellbar, indem der Strom durch die Beschleunigungsspule verändert wird. Die Bremszeit wird jeweils in Abhängigkeit von der meßbaren Beschleunigungszeit gewählt. Dazu enthält die Steuereinheit beispielsweise eine Vorrichtung zur Zeitbestimmung.

Die Masse des Stößels ist beispielsweise vergleichbar mit der Masse eines losen Teiles, wie beispielsweise einer Schraube, das in einem Rohrleitungssystem detektiert werden soll, gewählt. Dadurch ist eine Kalibrierung des KÜS im benötigten Meßbereich möglich.

Der größte Teil des Stößels, der mit den Elektromagneten zusammenwirkt, besteht aus ferritischem Material. Im Bereich der Aufschlagfläche ist der Stößel beispielsweise aus gehärtetem, vorverdichtetem Material gefertigt. Auch die integrierte Aufschlagplatte der Kalibriereinrichtung besteht z.B. aus einem solchen vorverdichteten Material. Dadurch bleibt der Verschleiß der erfindunsgemäßen Einrichtung gering. Mit einer konvexen Oberfläche ist die Aufschlagplatte fest an den zu überwachenden Behälter anpreßbar.

Das Gehäuse der Kalibriereinrichtung ist beispielsweise gasdicht gekapselt, ist mit einem inerten Gas gefüllt und besteht aus temperatur- und strahlenbeständigem Material. Damit ist die Kalibriereinrichtung an Rohrleitungen in Kernkraftwerken, insbesondere bei hohen Umgebungstemperaturen und in aggressiven Medien problemlos einsetzbar.

Mit der erfindungsgemäßen Einrichtung zum Kalibrieren eines KÜS wird der Vorteil erzielt, daß das gesamte KÜS durch einen bekannten Schallimpuls in einer in Betrieb befindlichen Anlage und selbst in kontaminierter Umgebung zu kalibrieren ist.

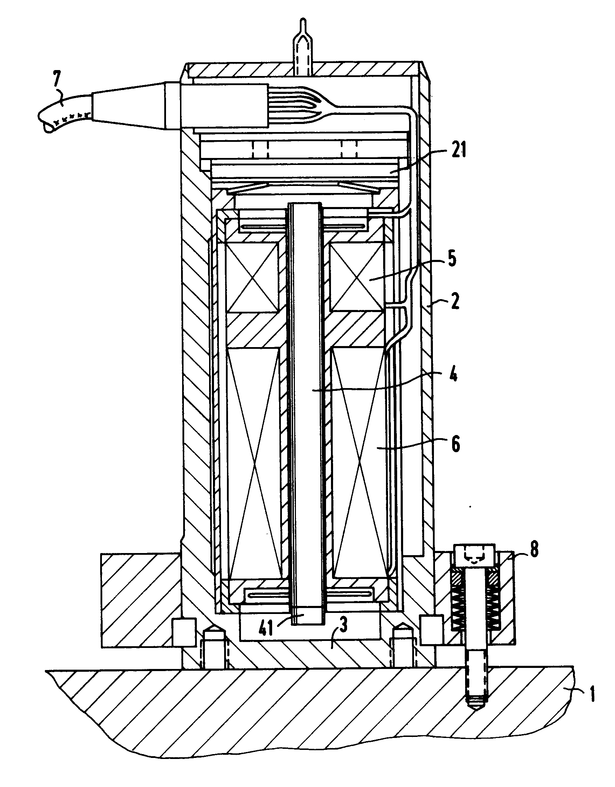

Die erfindungsgemäße Einrichtung wird anhand der Zeichnung näher erläutert:

Die Zeichnung zeigt die erfindungsgemäße Kalibriereinrichtung.

Auf der Oberfläche eines Rohres 1 ist ein Gehäuse 2 aus einem temperatur- und strahlenbeständigen Material angeordnet, das mit einer integrierten Aufschlagplatte 3 am Rohr 1 anliegt. Im Gehäuse 2 ist ein Stößel 4 als Kern von zwei hintereinander angeordneten Spulen, einer Hubspule 5 und einer Beschleunigungsspule 6 angeordnet. Der größte Teil des Stößels 4, der sich zwischen den Spulen 5 und 6 befindet, besteht aus ferritischem Material. Nur der gegen die Aufschlagplatte 3 zu führende Kopf 41 des Stößels 4 ist aus gehärtetem, vorverdichtetem Material gefertigt und mit einer konvex geformten Stirnseite versehen. Aus einem geeigneten vorverdichteten Material besteht auch die integrierte Aufschlagplatte 3.

Beim Anheben des Stößels 4 schlägt dessen oberes Ende gegen einen Anschlag 21 im Gehäuse 2. Dadurch ist die Hubbewegung des Stößels 4 begrenzt. Die Beschleunigungsspule 6 ist mit nichtdargestellten Kondensatoren verbunden, damit die zur Bewegung des Stößels 4 benötigte Energie bereitgestellt werden kann. Am Anschlag 21 und an der Aufschlagplatte 3 sind Kontakte angeordnet, die eine Berührung durch den Stößel 4 erkennen. Diese Kontakte und die Spulen 5 und 6 stehen über einen Anschluß 7 mit einer Steuereinheit in Verbindung. Hiermit wird Beschleunigen und Bremsen des Stößels 4 aufeinander abgestimmt. Der Bremsvorgang wird eingeleitet, sowie eine leitende Verbindung zwischen dem Stößel 4 und der Aufschlagplatte 3 besteht. Als Maß für den Bremsvorgang dient die Zeit, die für den Weg vom Anschlag 21 zur Aufschlagplatte 3 benötigt wird. Darüber hinaus ist die Anzahl der Stöße registrierbar. Mit der erfindungsgemäßen Kalibriereinrichtung wird ein genau zu definierendes Körperschallsignal im Rohr 1 erzeugt. Dieses Signal ist zum Kalibrieren eines KÜS geeignet. Das Gehäuse 2 der Kalibriereinrichtung ist am Rohr 1 durch eine Spannvorrichtung 8 befestigt. Ein guter Kontakt mit der Oberfläche des Rohres 1 ist dadurch gegeben, daß die Auflagefläche der Aufschlagplatte 3 vor dem Festspannen konvex geformt ist. Nach dem Befestigen der Spannvorrichtung 8 wird dadurch die Aufschlagplatte 3 und damit das gesamte Kalibriergerät gegen die Oberfläche des Rohres 1 fest angedrückt.

**Patentansprüche**

1. Einrichtung zum Kalibrieren eines Körperschallüberwachungssystems, bestehend aus einem Stößel (4), der durch Elektromagnete (5 und 6) gegen einen Körper, welcher Sensoren eines Körperschallüberwachungssystems zur Überwachung des Körpers trägt, zu bewegen ist, wobei in einem Gehäuse (2) den Stößel (4) umfassend eine Beschleunigungsspule (6) zur Beschleunigung des Stößels (4) auf den Körper zu angeordnet und mit einer Steuereinheit zur Steuerung der Bewegung des Stößels (4) verbunden ist, **dadurch gekennzeichnet,** daß in dem Gehäuse (2) den Stößel (4) umfassend eine Hubspule (5), durch die der Stößel (4) gegen einen Anschlag (21) am Gehäuse (2) vom Körper weg zu bewegen ist, angeordnet und mit der Steuereinheit verbunden ist, die dazu mit am Anschlag (21) und am Aufschlagpunkt des Stößels (4) angeordneten Kontakten in Verbindung steht.

2. Einrichtung nach Anspruch 1, **dadurch gekennzeichnet,** daß das Gehäuse (2) gegen den Körper, der ein Körperschallüberwachungssystem trägt, durch eine integrierte Aufschlagplatte (3) abgeschlossen ist, die am Körper anliegt und Schläge des Stößels (4) aufnimmt und überträgt.

3. Einrichtung nach Anspruch 1, **dadurch gekennzeichnet,** daß die Beschleunigungsspule (6) mit Speicherkondensatoren zur Bereitstellung der Energie zum Beschleunigen und Bremsen des Stößels (4) verbunden ist.

4. Einrichtung nach Anspruch 1, **dadurch gekennzeichnet,** daß der Stößel (4) im innerhalb der Spulen (5 und 6) geführten Bereich teilweise aus ferritischem Material besteht und daß der der Aufschlagplatte (3) zugewandte Kopf (41) des Stößels (4) aus einem gehärteten, vorverdichteten Material besteht.

5. Einrichtung nach Anspruch 1, **dadurch gekennzeichnet,** daß die Masse des Stößels (4) der Masse möglicher Körperschall auslösender Teile etwa entspricht.

6. Einrichtung nach Anspruch 2, **dadurch gekennzeichnet,** daß die integrierte Aufschlagplatte (3) an der dem Körper zugewandten Seite konvex geformt ist.

7. Einrichtung nach Anspruch 1, **dadurch gekennzeichnet,** daß die Steuereinheit eine Vorrichtung zur Zeitbestimmung enthält.

8. Einrichtung nach den Ansprüchen 1 und 2, **dadurch gekennzeichnet,** daß das Gehäuse (2) gasdicht in sich geschlossen und gegen viele Chemikalien resistent ist.

9. Einrichtung nach Anspruch 1, **dadurch gekennzeichnet,** daß das Gehäuse (2) und die Einbauten aus temperatur- und strahlenbeständigen Materialien bestehen.

10. Einrichtung nach Anspruch 1, **dadurch gekennzeichnet,** daß das Gehäuse (2) mit einem inerten Gas gefüllt ist.

## Claims

1. Apparatus for calibrating a structure-borne noise monitoring system, comprising a push rod (4), which is to be moved by electromagnets (5 and 6) against a structure, which carries sensors of a structure-borne noise monitoring system for monitoring the structure, wherein an acceleration coil (6) is arranged in a housing (2) encompassing the push rod (4) for the acceleration of the push rod (4) towards the structure and is connected to a control unit for the control of the movement of the push rod (4), characterized in that a lifting coil (5) is arranged in the housing (2) encompassing the push rod (4), by means of which the push rod (4) is to be moved against a stop (21) on the housing (2) away from the structure, and which is connected to the control unit, which for this purpose is connected to contacts arranged on the stop (21) and on the impact point of the push rod (4).

2. Apparatus according to claim 1, characterized in that the housing (2) is closed off against the structure, which carries a structure-borne noise monitoring system, by means of an integrated impact plate (3) which rests against the structure and absorbs and transfers impacts of the push rod (4).

3. Apparatus according to claim 1, characterized in that the acceleration coil (6) is connected to storage capacitors for providing the energy for the acceleration and braking of the push rod (4).

4. Apparatus according to claim 1, characterized in that in the region guided inside the coils (5 and 6) the push rod (4) consists in part of ferritic material and that the head (41) of the push rod (4) facing the impact plate (3) consists of a hardened, precompressed material.

5. Apparatus according to claim 1, characterized in that the mass of the push rod (4) corresponds approximately with the mass of possible parts emitting structure-borne noise.

6. Apparatus according to claim 2, characterized in that the integrated impact plate (3) on the side facing the structure is formed in a convex manner.

7. Apparatus according to claim 1, characterized in that the control unit contains a device for time determination.

8. Apparatus according to claims 1 and 2, characterized in that the housing (2) is self-contained in a gas-tight manner and is resistant to many chemicals.

9. Apparatus according to claim 1, characterized in that the housing (2) and the components consist of materials which are resistant to temperature and radiation.

10. Apparatus according to claim 1, characterized in that the housing (2) is filled with an inert gas.

## Revendications

1. Dispositif pour calibrer un système de contrôle du son transmis par un corps, constitué par un poussoir (4), qui doit être déplacé au moyen d'électroaimants (5 et 6) par rapport à un corps qui porte des capteurs d'un système de contrôle du son transmis par le corps, pour le contrôle de ce dernier, et dans lequel une bobine d'accélération (6) servant à accélérer le poussoir (4) en direction du corps est disposée dans un boîtier (2), de manière à entourer le poussoir (4), et est raccordée à une unité de commande servant à commander le déplacement du poussoir (4), caractérisé par le fait que dans le boîtier (2), une bobine de levage (5), au moyen de laquelle le poussoir (4) doit être écarté du corps pour être appliqué contre une butée (21) sur le boîtier (2), est raccordée à l'unité de commande qui, à cet effet, est reliée à des contacts disposés sur la butée (21) et au point d'impact du poussoir (4).

2. Dispositif suivant la revendication 1, caractérisé par le fait que le boîtier (2) est fermé, en direction du corps qui porte un système de contrôle de la transmission du son dans ce corps, par une plaque d'impact intégrée (3) qui s'applique contre le corps et reçoit et transmet des chocs du poussoir (4).

3. Dispositif suivant la revendication 1, caractérisé par le fait que la bobine accélératrice (6) est raccordée à des condensateurs de stockage pour fournir l'énergie servant à accélérer et à freiner le poussoir (4).

4. Dispositif suivant la revendication 1, caractérisé par le fait que le poussoir (4) est réalisé en partie en un matériau ferritique dans la zone de guidage à l'intérieur des bobines (5 et 6), et que la tête (41) du poussoir (4), tournée vers la plaque d'impact (3), est réalisée en un matériau trempé, précomprimé.

5. Dispositif suivant la revendication 1, caractérisé par le fait que la masse du poussoir (4) correspond à la masse d'éventuelles parties déclenchant la transmission d'un son dans le corps.

6. Dispositif suivant la revendication 2, caractérisé par le fait que la plaque d'impact intégrée (3) est agencée avec une forme convexe au niveau de sa face tournée vers le corps.

7. Dispositif suivant la revendication 1, caractérisé par le fait que l'unité de commande contient un dispositif pour déterminer le temps.

8. Dispositif suivant les revendications 1 et 2, caractérisé par le fait que le boitier (2) est fermé en soi d'une manière étanche aux gaz et est résistant vis-à-vis de nombreux produits chimiques.

9. Dispositif suivant la revendication 1, caractérisé par le fait que le boîtier (2) et les structures intégrées sont réalisés en des matériaux résistant à la température et au rayonnement.

10. Dispositif suivant la revendication 1, caractérisé par le fait que le boîtier (2) est rempli par un gaz inerte.